# EUROPEAN PATENT APPLICATION

(11) **EP 2 965 968 A1**
(43) Date of publication of application: **13.01.2016**
(21) Application number: 14175943.1
(22) Date of filing: 07.07.2014
(51) Int. Cl.: B62B 3/16, B62B 3/02, B62B 5/00

(54) **A trolley, a storage unit and a trolley and storage unit system**

(71) Applicant: Ipg Intelligent Packaging Group AB, 302 41 Halmstad (SE)
(72) Inventor: Josefsson, Tobias, 302 75 Halmstad (SE)
(74) Representative: Awapatent AB

(57) **Abstract**

A trolley and storage unit system comprises a trolley and at least one storage unit mountable on said trolley. The storage unit is selectively arrangable in either a non-tilted position or in a tilted position. One of said trolley and said storage unit comprises a first contact portion and a second contact portion. The other one of said trolley and said storage unit comprises a third contact portion. When the first contact portion is in contact with the third contact portion, the storage unit is in its non-tilted position. When the second contact portion is in contact with the third contact portion, the storage unit is in its tilted position.

## Description

### Technical field

The present inventive concept relates to a trolley provided with wheels. The present inventive concept also relates to a storage unit. Furthermore, the present inventive concept relates to a trolley and storage unit system.

### Background art

In various industries it is common practice to transport stacks of boxes or crates on, for example, pallets or trolleys. For instance, in the food industry, a supplier may deliver stacks of crates or boxes to a grocer. The grocer may decide to remove the contents from the crates or boxes and place it on display, e.g. on shelves. The customers can then freely choose between different items on display. Although this may be beneficial to the customers, this procedure is time consuming for the grocer or the supplier. An alternative is to simply leave the stack of boxes or crates as they come, which normally only allows the customer easy access to items from the uppermost box or crate in the stack.

It would be desirable to allow for more efficient handling of the contents of stacks of crates, boxes or similar, in particular to provide a more efficient way of displaying the contents.

### Summary of the inventive concept

An object of the present inventive concept is to alleviate the drawbacks of the prior art. This and other objects, which will become apparent in the following, are accomplished by means of trolley and storage unit system, as defined in the accompanying independent claim. This and other objects are also achieved by means of a trolley described in this disclosure as a second aspect of the present inventive concept, and by a storage unit described in this disclosure as a third aspect of the present inventive concept.

The inventor has realized that by providing storage units, such as crates, boxes, trays etc, in a tilted position, the items contained in the storage units may due to gravitation be efficiently kept in the storage unit and the risk of the items falling out may be reduced, even if the storage unit has a large access opening. It has also been realized that the storage unit may be transported in such a tilted position and be placed on display without removing the items therein. This is particularly advantageous if a stack of tilted storage units are provided, in which case they may have a large access opening through which customers may remove the items, even when the storage units are stacked onto each other, as long as the items rest on a surface of the storage unit which inclines downwardly away such an access opening. Thus, the grocer does not have to move the items from the storage units onto shelves, and the customer may still freely choose an item from any one of the storage units in the stack.

According to a first aspect of the present inventive concept, a trolley and storage unit system is provided. The trolley and storage unit system comprises
a trolley, and
at least one storage unit mountable on said trolley, wherein the trolley is provided with wheels for transporting said storage unit, wherein the points of contact between said wheels and the ground are contained in a common geometrical plane,
wherein the storage unit is selectively arrangable in a first position in which said storage unit is non-tilted relative to said geometrical plane and in a second position in which said storage unit is tilted relative to said geometrical plane,
wherein one of said trolley and said storage unit comprises a first contact portion and a second contact portion,
wherein the other one of said trolley and said storage unit comprises a third contact portion, and
wherein in said first position of the storage unit, said first contact portion is in contact with said third contact portion, and in said second position, said second contact portion is in contact with said third contact portion.

Thus, in at least some embodiments the storage unit comprises a first and second contact portion which may selectively be placed on the trolley at a third contact portion. For instance, the trolley may be provided with some engagement means such as a protrusion (third contact portion), and the storage unit may be provided with two complementary depressions (first and second contact portions). When one of the depressions is mated with the protrusion, the storage unit will be in the first non-tilted position, and when the other one of the depressions is mated with the protrusion, the storage unit will be in the second tilted position. It should be understood the first and second contact portions could instead be protrusions which are complementary to a third contact portion in the form of a depression. Furthermore, in at least some embodiments the first and second contact portions (e.g. as protrusions or depressions) are provided on the trolley, while the third contact portion (e.g. complementary depression or protrusion) is provided on the storage unit. It should be understood that protrusions and depressions are merely illustrating examples of possible contact portions, and there are several other conceivable contact portions, e.g. flat contact portions, or contact portions arranged at different levels, i.e. vertically separated (seen in a direction perpendicular to the ground). This latter possibility is reflected in at least the following embodiment.

According to at least one exemplary embodiment, said first contact portion is located in a first geometrical plane and said second contact portion is located in a second geometrical plane which is different from said first geometrical plane, wherein each one of the first and second geometrical planes extends in parallel with said common geometrical plane. Thus, when the third contact portion mates with the first contact portion, it will be at a different level than if it mates with the second contact portion. For instance, if the first and second contact portions are provided at different levels on the trolley, and the third contact portion is provided on the storage unit, such as at or near a rearward edge of the storage unit, then the third contact portion is mountable on two different levels of the trolley. If other parts of the storage unit, e.g. a forward edge of the storage unit, is not displaced in the vertical direction as much as the third contact portion when this is displaced between the first and second contact portions of the trolley, then a change in tilting angles is obtained when said displacement is made.

According to at least one exemplary embodiment, second geometrical plane is located between said first geometrical plane and said common geometrical plane. Thus, the first contact portion may be located above the second contact portion. In at least some embodiments the first contact portion may be formed by of formed at a ledge or a rim. Such a ledge or a rim may be raised from a base which comprises the second contact portion.

As mentioned previously, the first and second contact portions may be located either on the trolley or on the storage unit. According to at least one exemplary embodiment, said trolley comprises said first contact portion and said second contact portion, and wherein said storage unit comprises said third contact portion. Suitably, the trolley may, in at least some embodiments present at least two surface levels on which the storage unit may rest. The two levels may be formed by a discrete step, by a continuous rising from the ground. Suitably, in at least some embodiments, the first contact portion is provided at a higher level than the second contact portion. For instance the first contact portion may be formed by or be present on a ledge or a rim which is located at a higher level a base which comprises the second contact portion. In at least some embodiments, said first contact portion is located at or near a rearward edge of the trolley.

Although the contact portions may be completely flat, e.g. as the horizontal steps of a staircase, where, e.g. the first contact portion is one or more steps higher than the second contact portion (or vice versa), in other embodiments the contact portions may be non-flat. According to at least one exemplary embodiment, said first contact portion comprises at least one retaining portion adapted to mate with said third contact portion for counteracting lateral movement of said storage unit. The retaining portion may, for instance, be one or more protruding elements, such as bosses or studs. The third contact portion of the storage is suitably provided with complementary retaining portion, such as mating recesses or grid holes etc.

According to at least one exemplary embodiment, said trolley comprises a forward edge, a rearward edge and a base, wherein at least a portion of said base is inclined relative to said common geometrical plane, wherein the inclination is such that said inclined base portion is at a higher level near the forward edge compared to near the rearward edge.

It is to be understood that in this application, the term forward edge and rearward edge, whether referring to the trolley or to the storage unit, has the following intended orientation. The forward edge is on the customer facing side. Thus, when a customer whishes to access or remove an item, such as a loaf of bread or the like, from a storage unit of the trolley and storage unit system, he/she will do it at the forward edge of the storage unit (and at the forward edge of the trolley). Thus, the rearward edge is normally facing away from the customer.

Since the inclined base portion may incline downwardly in a direction towards the rearward edge of the trolley, it is possible to tilt the storage unit in a displaying position, in which the items contained in the storage unit will due to gravitation be urged to fall towards the rearward edge of the storage unit, allowing a wide opening at the forward edge of the storage unit for easy access to the customer.

According to at least one exemplary embodiment, said second contact portion is located at said inclined base portion near the rearward edge of the trolley. The third contact portion of the storage unit may, suitably, be at or near the rearward edge of the storage unit. When the third contact portion is placed on the second contact portion at the inclined base portion, the storage unit will tilt upwardly towards the forward edge.

It should be understood that other base portions are also conceivable instead of, or in addition to, an inclined base portion. For instance, the base may comprise a higher portion at the forward edge and a lower portion near the rearward edge of the trolley, which are separated by a discrete step.

In at least one exemplary embodiment, there trolley comprises a raised frame around the base. Thus, the frame may extend on the forward and rearward edges of the trolley, and suitably, also on the lateral edges (extending between the front and rearward edges) of the trolley. The base may be substantially parallel with said common geometrical plane, or it may comprise at least a portion which is inclined relative to said geometrical plane. The inclination is suitably such that it approaches said common geometrical plane in a direction towards the rearward edge.

According to at least one exemplary embodiment, the forward edge of the trolley is provided with one or more engagement elements. Such an engagement element may further contribute to supporting the storage unit in the tilted and non-tilted positions. In at least some exemplary embodiments, said engagement element is one or more raised portions at the forward edge. For instance, an engagement element may be in the form of an elongate ridge or bar, suitably extending in parallel with the forward edge of the trolley. The storage unit may have complementary engagement means, such as grooves, channels or notches which may engage with the engagement element of the trolley. For instance, such grooves, channels or notches may be formed in grid elements of a lower portion of the storage unit. In at least some exemplary embodiments, in the first non-tilted position of the storage unit, the complementary engagement means is not in engagement with the engagement element of the trolley, while in the second tilted position, the complementary engagement means is in engagement with said engagement element. Suitably, the complementary engagement means, such grooves, channels or notches, may be hooked on to the engagement element, such as en elongate ridge or bar.

The trolley may suitably be adapted to receive another corresponding trolley, so as to create a pile of trolleys. This may be advantageous for storage and accommodation reasons. This is reflected in at least one exemplary embodiment, according to which the trolley comprises a base (such as the above mention based including an inclined base portion), and the base comprises a lower side and an upper side, wherein said wheels of the trolley include at least one forward wheel and at least one rearward wheel located on the lower side of the base, wherein, as seen in directions perpendicular to said geometrical plane, said base is on its upper side provided with at least one forward recess aligned with said forward wheel and at least one rearward recess aligned with said rearward wheel.

Thus, a second trolley may be located on top of a first trolley, wherein the forward recess of the first trolley receives the forward wheel of the second trolley, and the rearward recess of the first trolley receives the rearward wheel of the second trolley.

Suitably, the trolley has at least three wheels for rolling along the ground. More suitably, the trolley comprises four wheels. In at least some example embodiments, the trolley comprises two forward wheels and two backward wheels. The upper side of the base of the trolley may be provided with two forward recesses and two rearward recesses for receiving the two forward and two rearward wheels of another trolley.

Although the recesses may be arranged on a non-inclined base, according to at least some embodiments, the recesses may at least partly be arranged on the previously described inclined base portion. According to at least one exemplary embodiment, said forward recess is larger or deeper than said rearward recess, wherein said forward and rearward recesses are at least partly located at said inclined portion of the base. A deeper forward recess allows the trolleys to be arranged in non-tilted positions on top of each other, despite the inclination of the base portion.

According to at least one exemplary embodiment, said base comprises a rearward edge portion which defines a wall extending downwardly towards the inclined base. The wall may provide additional support to the third contact portion at the storage unit is in contact with the second contact portion of the trolley, i.e. when the storage unit is in its tilted position. Instead of or in addition to a wall, other means may be provided for limiting the rearward movement of the storage unit in its tilted position. For instance, the trolley and the storage unit may be provided with mutually cooperating raised and/or lowered sections, or with mutually cooperating friction means, etc.

Although said third contact portion may be provided at various locations of the storage unit, as mentioned previously, said third contact portion may suitably be a rearward portion of said storage unit. For instance it may be at a lower portion or underside of the storage unit. Such a lower portion or underside may be an unbroken piece of material, or it may comprise an open or broken structure, such as a crosswise pattern of grid elements, between which apertures are present. A storage unit which is comprises such a crosswise pattern of grid elements has low weight and allows for exchange of air. The entire or almost the entire lower portion or underside may be made of such an open or broken structure of grid elements, wherein the rearward portion thereof comprises or constitutes the third contact portion.

It should be understood that the third contact portion may extend from one lateral edge to another lateral edge of the storage unit, or it may extend a shorter distance, e.g. centrally near or at the rearward edge of the storage unit. Similarly, the first contact portion and the second portion of on the trolley may have corresponding extensions between the lateral edges of the trolley.

According to at least one exemplary embodiment, said at least one storage unit comprises a plurality of storage unit which are stackable,
wherein when a lowest storage unit is arranged on said trolley in said first position, the other storage units of said plurality of storage units are stackable on top of said lowest storage unit so that each one is non-tilted relative to said common geometrical plane, and
wherein when a lowest storage unit is arranged on said trolley in said second position, the other storage units of said plurality of storage units are stackable on top of said lowest storage unit so that each one is tilted relative to said common geometrical plane.

Thus, a stack of tilted storage units containing items, may be transported on a trolley from a supplier to a recipient, such as a grocer. The system of the trolley and the stack of tilted storage units may be presented to the customer without needing to unload anything. Although the gravitational force reduces the risk of items falling out from the tilted storage unit may be enough, it is possible, if desired, to provide additional securing measures. For instance, at the forward edge of the storage unit, where an access opening may be provided for customers to remove the items from the storage unit, there may be provided a blocking means, such as a bracket, a crossbar or the like, preventing or at least further reducing the risk of the items falling out of the storage unit inadvertently. The blocking means is suitably movable between a blocking position used during transportation of the storage unit with the items, and a non-blocking position when the system is on display, to allow customers to remove items from the storage units. When the storage units are to be returned to the supplier, the storage units may be stacked in the non-tilted position on the trolley.

According to at least one exemplary embodiment, said plurality of storage units are formable into a stack of non-tilted storage units having a total height which is lower than what the total height would be if the same plurality of storage units were formed into a stack of tilted storage units. Thus, when returning the storage units to the supplier, it would normally be possible to return more storage units on the same trolley compared to the number of storage units delivered from the supplier. This may be advantageous and space saving for, e.g. a grocer, who will not have to keep empty storage units together with item-containing storage units. According to at least one exemplary embodiment, said plurality of storage units are telescopically arranged relative to each other when formed into said stack of non-tilted storage units. Thus, lateral side portions of the storage units may be provided with vertical tracks and/or splines which cooperate to vertically guide one storage unit into another.

According to at least one exemplary embodiment, wherein when said plurality of storage units are formed into a stack of tilted storage units on the trolley, a lower portion of each storage unit is, relative to an upper portion of the nearest underlying storage unit, displaced towards the forward edge of the trolley. This allows the storage units to be within the confines of the trolley, i.e. no part of the storage units needs to extend beyond the forward, rearward or lateral edges of the trolley, despite the tilting of the storage units.

According to at least one exemplary embodiment, the storage units are tilted at angle of 5°-15° relative to said common geometrical plane, suitably 6°-12°, such as 7°-9°, for instance 8° relative to said common geometrical plane.

According to at least one exemplary embodiment, each storage unit has a first locking means at a lower portion thereof and a second locking means at an upper portion thereof, wherein the first locking means of the one of the storage units is adapted to mate with a second locking means of the nearest underlying storage unit. Suitably, on each storage unit, the second locking means is displaced towards the forward edge of the storage unit relative to the first locking unit. Thus, in a non-tilted position on the trolley, the first locking means of one storage unit will not mate with the second locking means of an underlying storage unit. However, when tilted, the first and second locking means will (if geometrically projected down to the trolley) for each storage unit be located at approximately the same position between the forward and rearward edges of the trolley.

It should be understood that the storage unit may have more several first locking means and several second locking means, e.g. one first and second locking means on each lateral edge or side of the storage unit.

Although the present disclosure has exemplified customers of a grocer as being the ones to which the storage unit(s) on the trolley is/are to be displayed, it should be understood that there are other used for the present inventive concept in which other types of users may benefit from the storage units being arrangeble in a tilted position. An example of such other types of users may be factory workers.

It should be understood that normally, said common geometrical plane coincides with the ground surface on which the trolley stands. However, in some instances the ground surface may be uneven, and therefore the points of contact, i.e. the interface, between the wheels (could also be referred to as ground wheels) of the trolley and the ground has been selected for defining a common geometrical plane. For a completely horizontal ground surface, the points of contact would normally be the lowest points on the wheels.

It should be understood that the present inventive concept may be implemented with various different types of storage units, such as boxes, trays, crates etc. The trolleys may be provided with or without handles, e.g. in the form of dollies or mobile platforms.

According to a second aspect of the present inventive concept, a trolley is provided. The trolley comprises a base having an upper side and a lower side, wherein the lower side is provided with at least one forward wheel and at least one rearward wheel allowing the trolley to transport items, such as one or more storage units, wherein when the trolley stands on the ground, the points of contact between said wheels and the ground are contained in a common geometrical plane, wherein, as seen in directions perpendicular to said geometrical plane, said base is on its upper side provided with at least one forward recess aligned with said forward wheel and at least one rearward recess aligned with said rearward wheel.

The trolley according to the second aspect of the inventive concept may comprise any one of the features of the trolley or trolleys discussed in connection with the any one of the other aspects of the inventive concept. For instance, the trolley may comprise an inclined base portion, wherein the inclination is such that it approaches said common geometrical plane in a direction towards the rearward edge of the trolley, wherein forward recess is deeper than the rearward recess to compensate for the inclination of the base portion.

Furthermore, the trolley according to the second aspect may receive any storage unit or stack of storage units as defined or discussed in any one of the other aspects of the present inventive concept.

According to a third aspect of the present inventive concept, there is provided a storage unit, which may, for instance be mounted on a trolley, such as a trolley as described in any one of the other aspects of the present inventive concept. The storage unit of the third aspect comprises a forward edge, a rearward edge, a lower portion and an upper portion, wherein the lower portion is provided with a first locking means and the upper portion is provided with a second locking means, wherein the first locking means is, relative to the second locking means displaced towards said forward edge.

The storage unit according to the third aspect of the inventive concept may comprise any one of the features of the storage units discussed in connection with the any one of the other aspects of the inventive concept. For instance, according to at least one exemplary embodiment, said storage unit is stackable on another storage unit comprising corresponding first locking means and second locking means, wherein the first locking means of said storage unit is engagable with the second locking means of said another storage unit.

Furthermore, the storage unit according to the third aspect of the inventive concept may be mounted on a trolley as defined or discussed in connection with any one of the other aspects of the present inventive concept. Additionally, the storage unit according to the third aspect may form part of a storage unit system comprising a plurality of such storage units which are stackable onto each other, for instance, as discussed elsewhere in this disclosure.

### Brief description of the drawings

In the following, some non-limiting exemplary embodiments of the inventive concept will be described with reference to the accompanying drawings.
Fig. 1 illustrates an exploded view of a trolley and storage unit system in accordance with at least one exemplary embodiment of the present inventive concept.
Fig. 2 is a cross sectional view of the system in Fig. 1 when the storage unit is mounted on the trolley in a non-tilted first position.
Fig. 3 is a cross sectional view of the system in Fig. 1 when the storage unit is mounted on the trolley in a tilted second position.
Fig. 4 illustrates a side view of a trolley and storage unit system in accordance with at least one exemplary embodiment of the present inventive concept, wherein several storage units are stacked in a tilted position on top of each other and the trolley.
Fig. 5 illustrates a perspective view of the system in Fig. 4.
Fig. 6 illustrates a side view of a trolley and storage unit system in accordance with at least one exemplary embodiment of the present inventive concept, wherein several storage units are stacked in a non-tilted position on top of each other and the trolley.
Fig. 7 illustrates a rear view of the system in Fig. 6.
Fig. 8 illustrates a perspective view of the system in Fig. 6.
Figs. 9-11 illustrate connecting interfaces between two storage units, in accordance with at least one exemplary embodiment of the present inventive concept.
Fig. 12 illustrates the possibility of connecting two trolleys to each other, in accordance with at least one exemplary embodiment of the present inventive concept.
Fig. 13 illustrates, in a perspective view, the possibility of piling trolleys on top of each other, in accordance with at least one exemplary embodiment of the present inventive concept.
Fig. 14 illustrates in cross-section the possibility of piling trolleys on top of each other, in accordance with at least one exemplary embodiment of the present inventive concept.

### Detailed description of the drawings

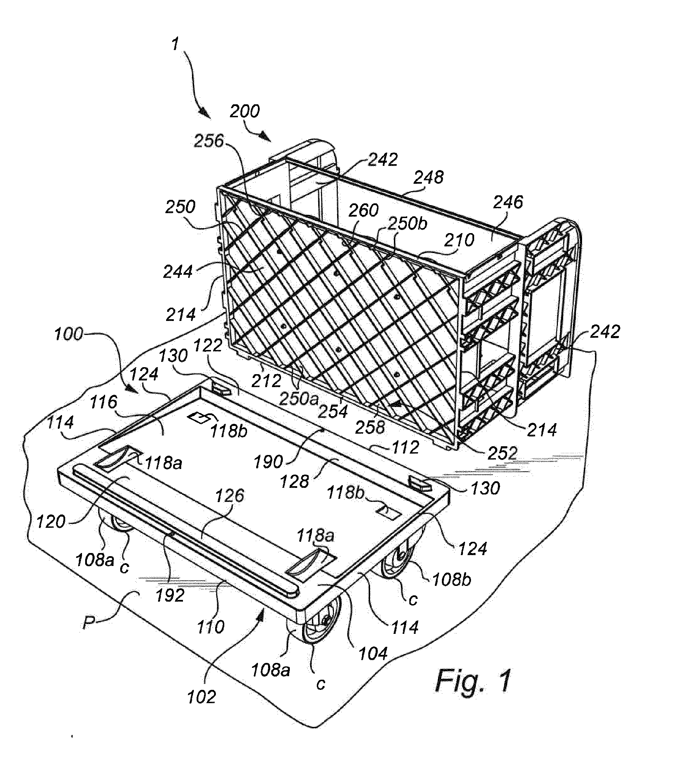

Fig. 1 illustrates an exploded view of a trolley and storage unit system 1 in accordance with at least one exemplary embodiment of the present inventive concept. The system 1 comprises a trolley 100 and a storage unit 200. Although the storage unit 200 is illustrated as a crate, such as a crate for bread loafs, other types of storage units, such as boxes, trays etc. are conceivable.

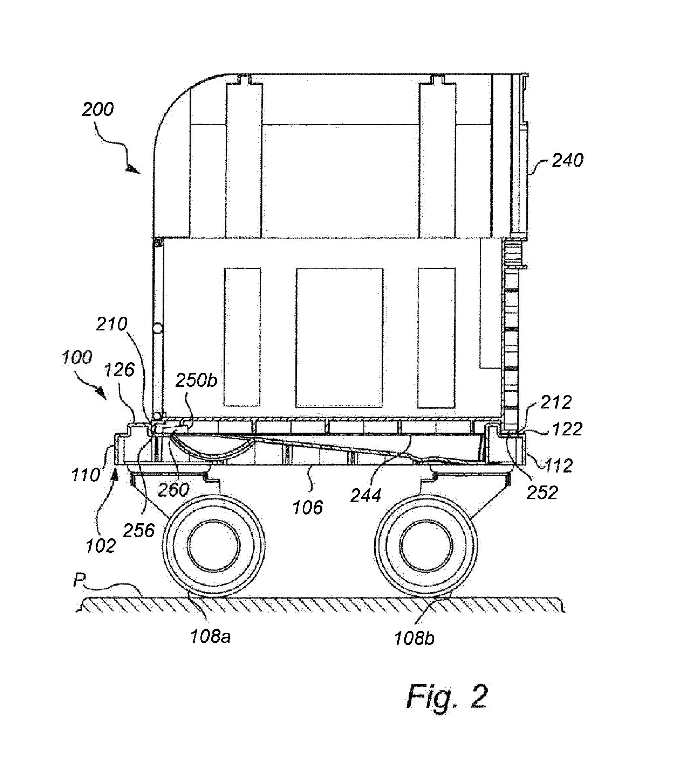

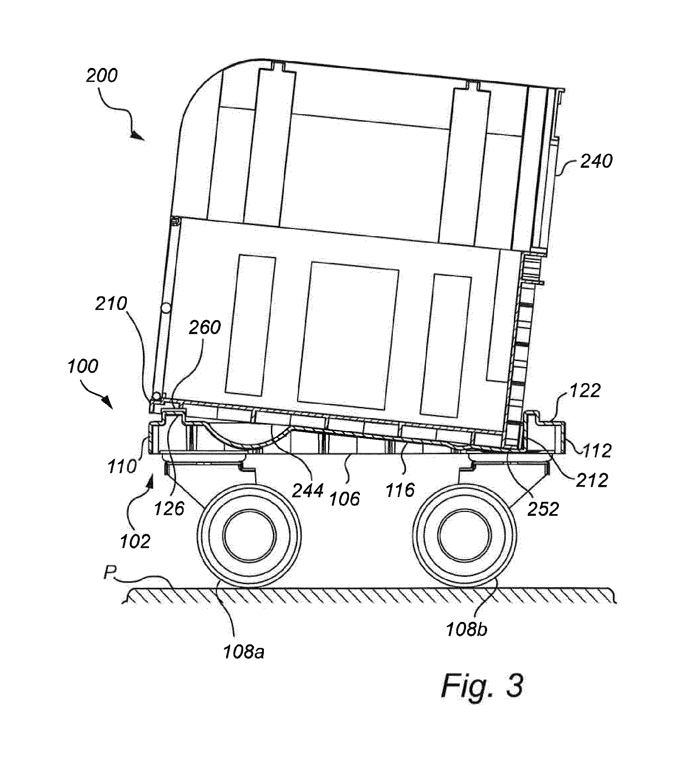

The trolley 100 comprises a platform or base 102. The base 102 has an upper side 104 and a lower side 106 (see Figs. 2 and 3). The lower side 106 is provided with four ground wheels 108a, 108b, wherein suitably at least some of which are pivotable around a pivot axle. The wheels are herein illustrated as forming two forward wheels 108a and two rearward wheels 108b (only one rearward wheel visible in Fig. 1). The wheels allow the trolley 100 to be displaced by rolling on a ground surface, such as a floor, pavement, street, etc. The interfaces or the points of contact C between the wheels and the ground are contained in a common geometrical plane P. For a completely horizontal ground surface, said points of contact C would be at the lowermost part of the wheels. When the trolley 100 is standing on a smooth and straight ground surface, whether the ground surface is horizontal or inclined, the ground surface coincides with said common geometrical plane P.

The trolley 100 has a forward edge 110, which is normally the edge facing, for instance, a person, such as a customer, who wishes to pick items from the storage unit 200. The trolley 100 has a rearward edge 112, which is normally facing away from said person. Lateral edges 114 extend between the forward edge 110 and the rearward edge 112.

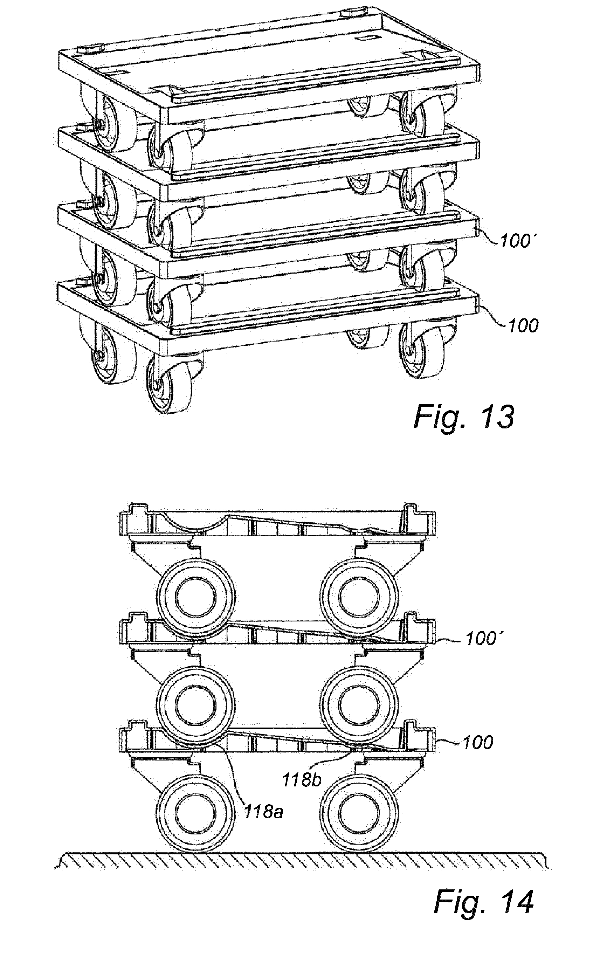

In this embodiment, the upper side 104 of the base 102 has an inclined portion 116. The inclined base portion 116 has its highest elevation toward the forward edge 110, and approaches the ground or the common geometric plane P in a direction towards the rearward edge 112. The inclined base portion 116 is provided with four recesses: two forward recesses 118a and two rearward recesses 118b. Each forward recess 118a is aligned with a respective forward wheel 108a, as seen in a direction perpendicular to said common geometrical plane P. Similarly, each rearward recess 118b is aligned with a respective rearward wheel 108b, as seen in a direction perpendicular to said common geometrical plane P. In this embodiment, the forward wheels 108a are illustrated as being partly located in the inclined base portion 116 and partly in a non-inclined forward portion 120 of the base 102, said forward portion 120 being located between the forward edge 110 and the inclined base portion 116. However, other options are also conceivable. For instance, if the inclined base portion 116 would be shorter and the non-inclined forward portion 120 wider, then the forward recesses 118a could be located entirely in the non-inclined forward portion 120. Conversely, if a narrower non-inclined forward portion 120 is present, then the forward recesses 118a could be located entirely in the inclined base portion 116. The rearward recesses 118b are located in the inclined base portion 116. The forward and rearward recesses 118a, 118b may have substantially the same width. Suitably the length and/or depth of the forward recesses 118a are greater than for the rearward recesses 118b. The recesses 118a, 118b allow another trolley 100' to be piled on top of the present trolley 100, for instance, as illustrated in Fig. 13 and Fig. 14. By making the forward recesses 118a in Fig. 1 larger/deeper than the rearward recesses 118b, the difference in elevation of the base 102 from the common geometrical plane P is compensated for, and a substantially straight pile of trolleys 100, 100', etc., is obtainable.

In Fig. 1, the trolley 100 has a frame-like appearance around the inclined base portion 116. The frame comprises said non-inclined forward portion 120. On the opposite side of the inclined base portion 116 there is a raised non-inclined rearward portion 122 of the frame, said rearward portion 122 extending to and along the rearward edge 112. Non-inclined lateral portions 124 extend along the lateral edges 114 between said forward portion 120 and said rearward portion 122. In this exemplary embodiment, the forward portion 120 is wider than the rearward portion 122. However, in other embodiments, they may either be of equal width or the rearward portion may be wider than the forward portion.

The forward portion 120 of the base 102 is near the forward edge 110 provided with an elongate engagement element 126, such as a ridge or a bar, for cooperation with the storage unit 200 as will be explained later. In other embodiments the elongate engagement element 126 could instead be divided into several shorter elements.

A vertical wall 128 extends down from the non-inclined rearward portion 122 to the inclined base portion 116. Said vertical wall 128 may provide support to a rearward edge of the storage unit 200, when resting on the inclined base portion 116. The rearward portion 122 of the base 102 of the trolley 100 is provided with two projecting retaining portions 130, such as in the form of studs or bosses. The retaining portions 130 are adapted to cooperate with corresponding mating portions of the storage unit 200 for counteracting lateral, forward and/or rearward movement of the storage unit 200 when resting on the rearward portion 122 of the base 102 of the trolley 100. Although two retaining portions 130 are illustrated it would be conceivable to have more, such as three, four or at least five retaining portions. Alternatively, it would be conceivable to have only one retaining portion, although it is believed that more retaining portions better counteract said movement.

As will be further discussed below, in the exemplary embodiment shown in Fig. 1, the non-inclined rearward portion 122 of the base 102 of the trolley 100 is a first contact portion and the inclined base portion 116 is a second contact portion. The non inclined rearward portion 122 (first contact portion) can be regarded as located in a first geometrical plane parallel to said common geometrical plane P, while said the inclined base portion 116 (second contact portion), or at least the rearward part of it, is located in a second geometrical plane which is located between the first geometrical plane and the common geometrical plane P.

When a third contact portion presented by the storage unit 200 is placed on said first contact portion, the storage unit 200 will be in a first position in which the storage unit 200 is non-tilted relative to the common geometrical plane P, and wherein when the third contact portion is placed on said second contact portion, the storage unit 200 will be in a second position in which the storage unit 200 is tilted relative to the common geometrical plane P. However, it should be understood that in other embodiments said second and third contact portions may be located elsewhere. For instance, rather than having the second contact portion as an inclined base portion 116, it could be a straight base portion which is lowered relative to the rearward portion 122, and suitably relative to the forward portion 120. Other conceivable embodiments include variable contact surfaces, e.g. at the rearward portion. For instance, the rearward portion could be represented by a rotatable rectangular solid which is thicker in one direction than in another. Thus, when one side is facing upwards the solid provides a first contact portion which is at a different level from the common geometrical plane than if the solid is rotated 90° around its axis so that another side, which would provide a second contact portion, faces upwards.

The storage unit 200 has a forward edge 210 and a rearward edge 212. Two lateral edges 214 extend from the forward edge 210 to the rearward edge 212. The storage unit 200 is receivable on the trolley 100 in a first position in which it is non-tilted and in a second position in which it is tilted. In both positions, the forward edge 210 of the storage unit 200 faces substantially in the same direction as the forward edge 110 of the trolley 100, while the rearward edge 212 of the storage unit 200 faces substantially in the same direction as the rearward edge 112 of the trolley 100.

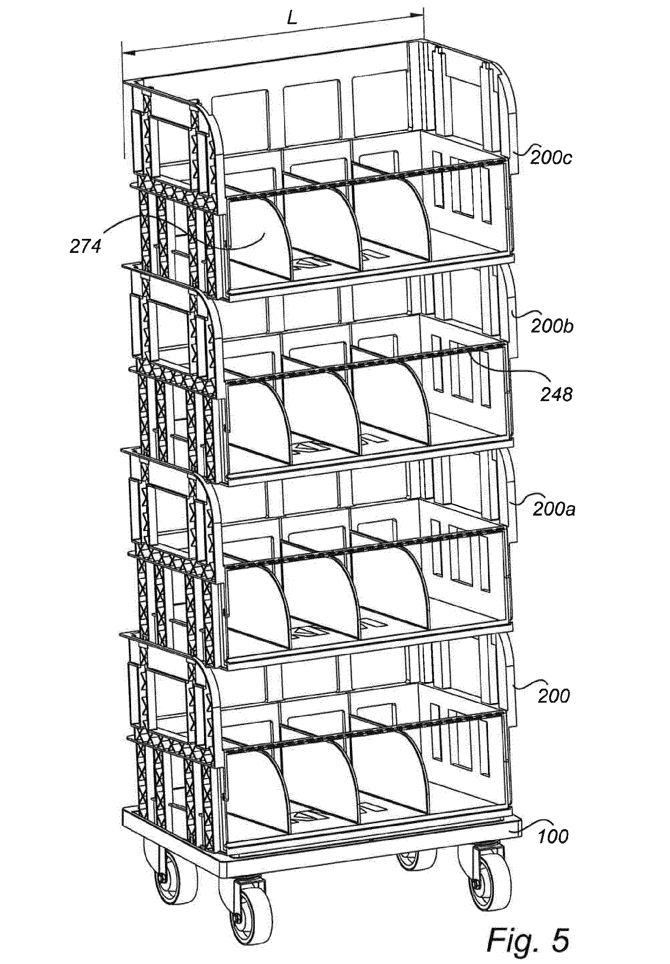

In this exemplary embodiment, a vertically extending rearward wall structure 240 (see, for instance, Figs. 2 and 5) rises from the rearward edge 212 of the storage unit 200, and from each one of the lateral edges 214 a vertically extending lateral wall structure 242 (see Fig. 1) projects. The storage unit 200 also has a bottom wall structure 244 from which the rearward and lateral wall structures 240, 242 extend upwardly (i.e. when the storage unit is arranged so that the bottom wall structure 244 stands horizontally). The bottom wall structure 244, the rearward wall structure 240 and the lateral wall structures 242 define a space in which items may be contained. At the forward edge 210 a frontal access opening 246 is provided. In this exemplary embodiment, the frontal access opening 246 extends between the two lateral wall structures 242, however, a smaller frontal access opening is also conceivable. Items may thus be accessed and removed from the storage unit 200 via the frontal access opening 246, even if the storage unit is blocked from above (for instance, due to other storage units being stacked on top of the present storage unit).

At the access opening 246, an optional blocking means 248 may be provided. The blocking means 248 may provide additional securing measures to reduce the risk of items falling out via the access opening 246 during transport. Suitably, after the transport, the blocking means 248 may be lowered down to the forward edge 210 in order to facilitate access of items through said access opening 246. The blocking means 248 may, for instance, be in the form of a bracket, a crossbar or the like.

The bottom wall structure 244 may either be an open structure, e.g. grids having intermediate apertures for allowing air to pass through the bottom wall structure, or the bottom wall structure may be solid. In the exemplary embodiment of Fig. 1, the bottom wall structure 244 is in the form of a solid floor portion, the underside of which is provided with reinforcing ribs 250 arranged in a crosswise manner. The underside of the bottom wall structure 244 has a rearward surface area 252 which will be in contact with the rearward portion 122 of the base 102 of the trolley 100, when the storage unit 200 is in the non-inclined first position. In this exemplary embodiment, the rearward surface area 252 of the underside of the bottom wall structure 244 of the storage unit 200 includes a rearward elongate rim surface 254 and rib portions 250a extending from said rim surface 254 and this rearward surface area 252 can thus be regarded as said third contact portion. At the forward edge 210, at the underside of the bottom wall structure 244, a corresponding forward rim surface 256 is present.

Fig. 2 is a cross sectional view of the system in Fig. 1 when the storage unit 200 is mounted on the trolley 100 in a non-tilted first position. In this first position of the storage unit 200, the bottom wall structure 244 of the storage unit 200 is substantially parallel with said common geometrical plane P. As can be seen from this cross-section, the first contact portion of the trolley (in this example the rearward portion 122 of the base of the trolley) has received said third contact portion presented by the storage unit (in this example said rearward surface area 252 including the rearward rim surface 254 and the rib portions 250a nearest the rearward rim surface 254). As seen in Fig. 1, the rib portions 250a nearest the rearward rim surface define a triangular space 258. The two projecting retaining portions 130 on the rearward surface 122 of the base 102 of the trolley 100 are dimensioned to fit in said triangular space 258, as illustrated in Fig. 2. This provides some securing of the storage unit 200 on the trolley 100, and reduces the risk of unintentional movements of the storage unit 200 relative to the trolley 100.

The forward rim surface 256 of the storage unit 200 is located on the base 102, just behind (rearwardly of) the elongate engagement element 126. The storage unite 200 may even abut the elongate engagement element 126 which provides an additional securing of the storage unit 200 on the trolley 100.

Fig. 3 is a cross sectional view of the system in Fig. 1 when the storage unit 200 is mounted on the trolley 100 in a tilted second position. In this second position of the storage unit 200, the bottom wall structure 244 of the storage unit 200 is inclined relative to with said common geometrical plane P. The bottom wall structure 244 substantially follows the inclination of the inclined base portion 116 of the trolley 100 and may therefore have substantially the same angle of inclination relative to the common geometrical plane P. Such an angle of inclination may suitably be 6°-12°, such as 7°-9°, for instance 8°.

As can be seen from this cross-section, the second contact portion of the trolley 100 (in this example the inclined base portion 116 of the trolley 100) has received said third contact portion presented by the storage unit 200 (in this example said rearward surface area 252 including the rearward rim surface 254 and the rib portions 250a near the rearward rim surface 254). In this exemplary embodiment, the trolley 100 has said vertical wall 128 which extends down from the non-inclined rearward portion 122 to the inclined base portion 116. Said vertical wall 128 may provide support to the rearward edge 212 of the storage unit 200, when resting on the inclined base portion 116 in its second position.

As previously explained, the underside of the bottom wall structure 244 of the storage unit 200 is provided with a grid of reinforcing ribs 250. As can be seen in Fig. 1 and Fig. 2, the rib portions 250b extending from the forward rim surface are provided with indentations 260 which function as complementary engagement means. As can be seen in Fig. 2, in the first position of the storage unit, the indentations 260 are separated at a distance from the elongate engagement element 126 of the trolley 100. However, in the second position of the storage unit 200, shown in Fig. 3, the indentations 260 fit onto the elongate engagement element 126 for additional securing of the storage unit 200 in this position. It may be noted that in this exemplary embodiment, as seen in Fig. 2, the indentations 260 have a downwards inclination towards the forward edge 210 of the storage unit 200. This is to compensate for the inclination that the storage unit 200 assumes in the tilted second position. However, in other embodiments, the indentations may be provided without such an inclination and instead the elongate engagement element may be provided with an inclined top surface so that it becomes aligned with the indentations when mated in the second position of the storage unit.

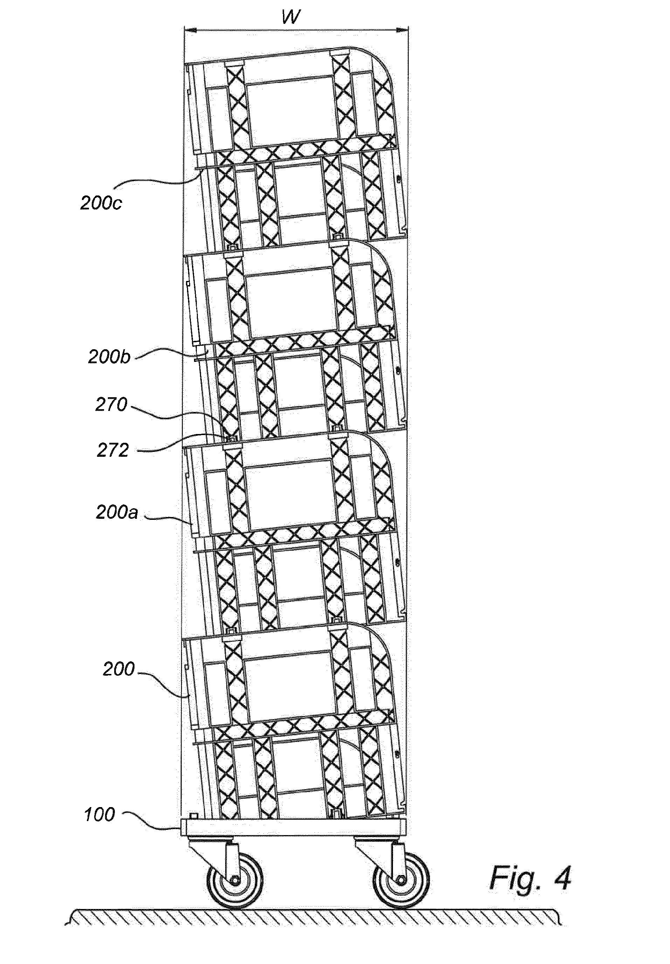

Fig. 4 illustrates a side view of a trolley and storage unit system in accordance with at least one exemplary embodiment of the present inventive concept, wherein several storage units 200, 200a, 200b, 200c are stacked in a tilted position on top of each other and the trolley 100. Fig. 5 illustrates a perspective view of the system in Fig. 4. In these drawings a stack of four tilted storage units are shown, however, the number of storage units in such a stack may be more or fewer.

Suitably, the outer confine of the stack of tilted storage units 200-200c, and suitably also the outer confine of the trolley 100, fits within the length and width dimensions of standardized pallets or half or quarter sizes thereof. For instance, a Euro pallet has a length of a 1200 mm and width of 800 mm. An American standard pallet has approximately the length 1200 mm and width 1000 mm. The dimension W (Fig. 4) extending from the forward to the rearward edge of the trolley could be selected from any one of W = 800 mm, 400 mm or 200 mm (Euro pallet) or W = 1000 mm, 500 mm or 250 mm (American pallet). The dimension L (Fig. 5) extending from one lateral edge to the other lateral edge of the trolley could be selected from any one of L = 1200 mm, 600 mm or 300 mm (based on the Euro pallet or American pallet).

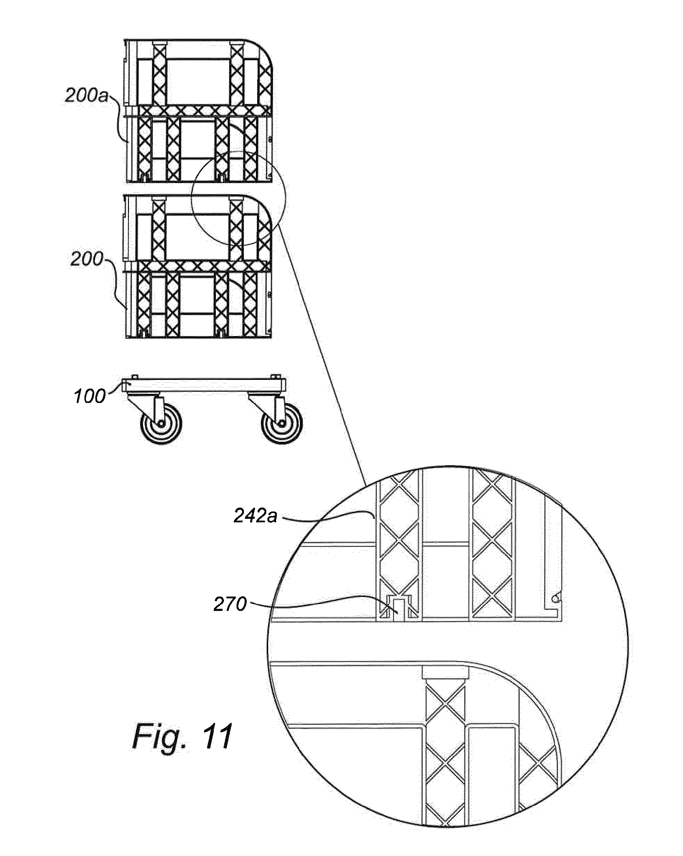

Turning to Fig. 11 storage units 200, 200a of embodiments of the present inventive concept may have a first locking means 270 at a lower portion thereof. As seen in the enlarged detailed view of Fig. 11 the first locking means 270 is provided as a short groove in a lateral wall structure portion 242a.

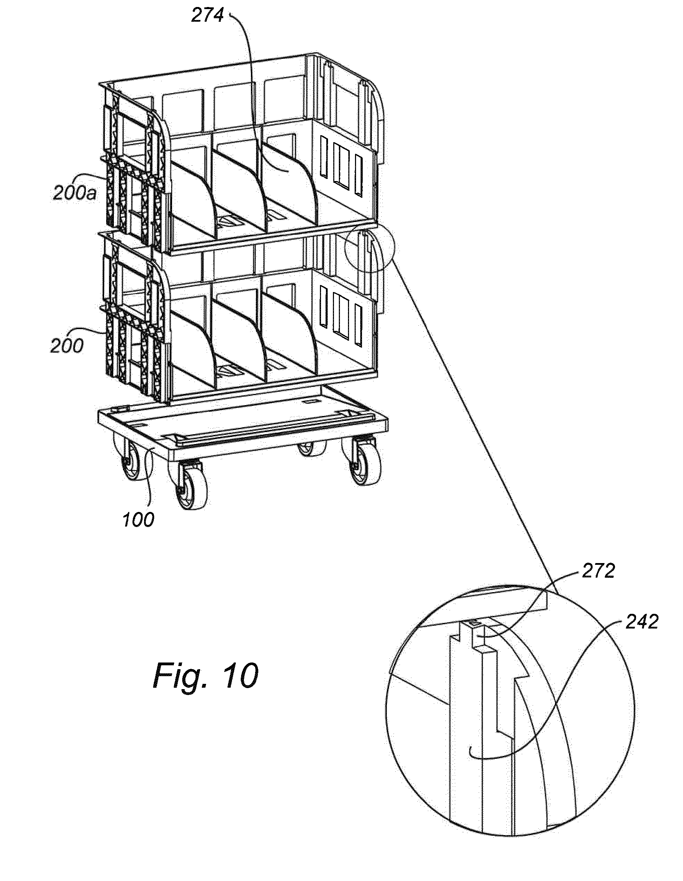

Turning to Fig. 10 storage units of embodiments of the present inventive concept may have a second locking means 272 at an upper portion thereof. As seen in the enlarged detailed view of Fig. 10, the second locking means 272 is a profiled portion of the lateral wall structure 242, and is adapted to be guided into the first locking means 270 according to Fig. 10.

Turning back to Fig. 4 and Fig. 5, the stack of tilted storage units 200-200c have been connected such that first locking means 270 of any storage unit (except the lowermost) are mated with the second locking means 272 of the storage unit directly underneath.

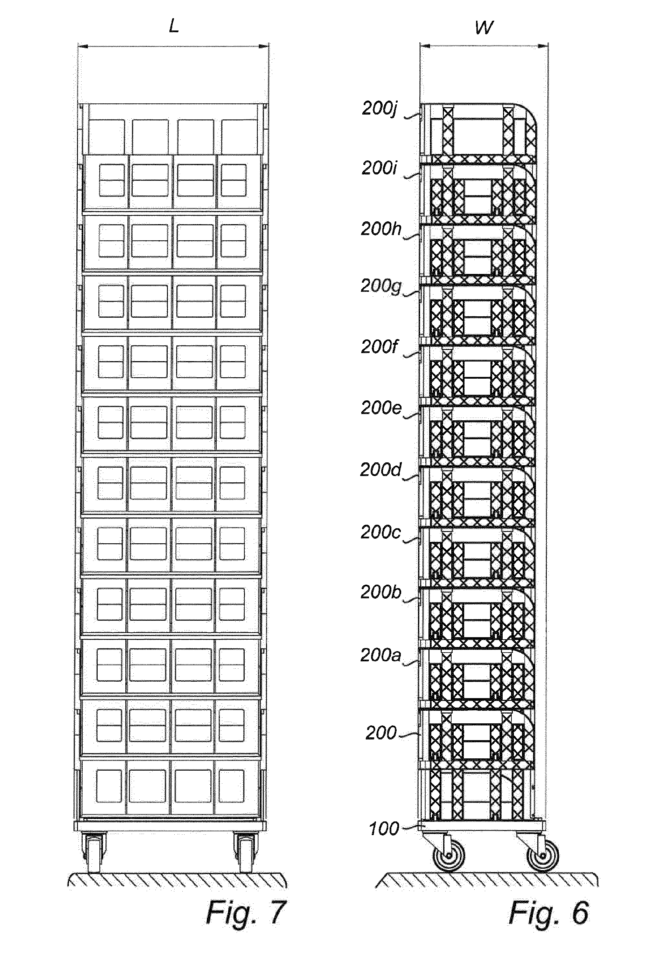

To provide the possibility of this mutual engagement of the first and second locking means 270, 272of two or more stacked storage units in tilted positions, in each individual storage unit the second locking means 272 is displaced in the forward direction relative to the first locking means 270. Thus, in a non-tilted position on the trolley (Figs. 6-8), the first locking means of one storage unit will not mate with the second locking means of an underlying storage unit. However, when tilted (Figs. 4-5), the first and second locking means will (if geometrically projected down to the trolley) for each storage unit be located at approximately the same position between the forward and rearward edges of the trolley.

It should be understood that the storage unit may have several first locking means and several second locking means, e.g. one first and second locking means on each lateral wall structure or side of the storage unit. In the illustrated exemplary embodiments the number of first and second locking means is four each, two located forwardly and two rearwardly.

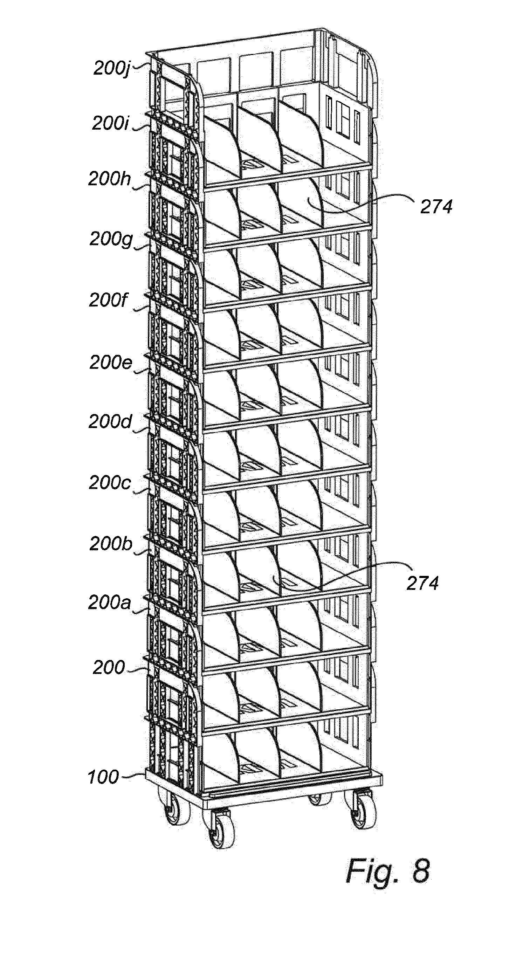

As shown in, for instance, Figs. 5, 8 and 10, separating plates 274 may be provided in the storage units for placing items in defined spaces. For instance, loaves of bread may arranged upright, next to each other, separated by said separating plates 274, which may suitably be removable and/or re-arrangable in different positions. The brackets or crossbars (blocking means 248) are shown in a blocking position in Fig. 5, reducing the risk of items, such as loaves of bread, falling out. This may be suitable during transportation of the system. When in place, the crossbars may be arranged in a non-blocking position, e.g. lowered to the forward edge of the storage unit at the bottom wall structure. The items are thus put on display in the stack of tilted storage units, and may be easily accessed by, for instance, customers. When empty storage units are to be returned to the supplier, the crossbar may remain in the non-blocking position, as illustrated in, for instance, Fig. 8.

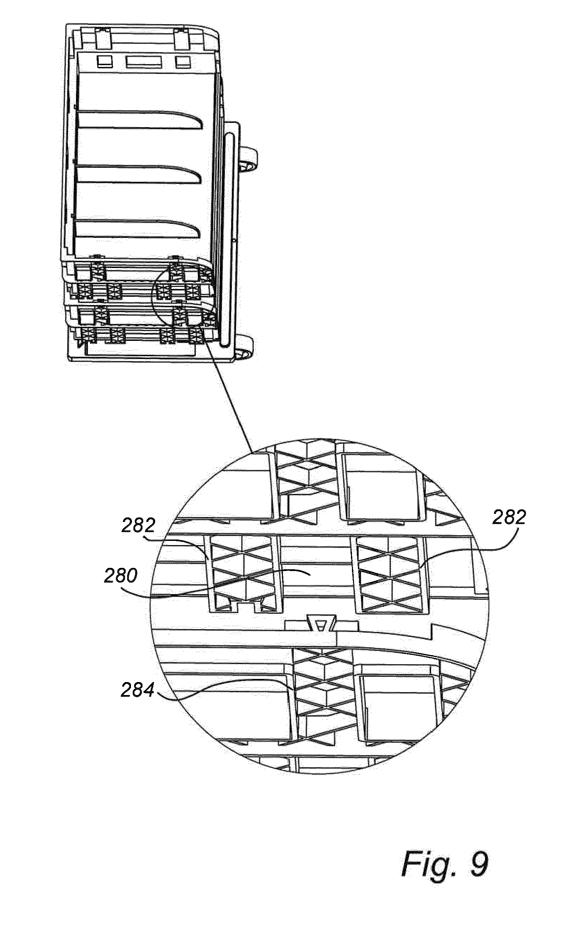

Figs. 6-8 illustrate how several storage units 200-200j are stacked in a non-tilted position on top of each other and the trolley 100. As can be seen from these drawings a stack of non-tilted storage units can be made more compact, since they are allowed to be telescopically stacked on to each other. In this exemplary embodiment, and as best illustrated in Fig. 9, a lower half of the lateral wall structures of the storage units are provided with vertical tracks 280 between posts 282. An upper half of the lateral wall structures also comprises posts 284 which are adapted to mate with the vertical tracks 280 of a storage unit mounted on top of the present one. The posts 284 at the upper half of the lateral wall structure of a first storage unit is adapted to be guided into the vertical track 280 at the lower half of the lateral wall structure of a second storage unit, when the second storage unit is mounted on top of the first storage unit in the non-tilted position shown in Figs. 6-8.

Obviously, in the non-tilted position shown in Figs. 6-8, the confine of the stack of non-tilted storage units 200-200j will be within the previously discussed length and width dimensions L and W.

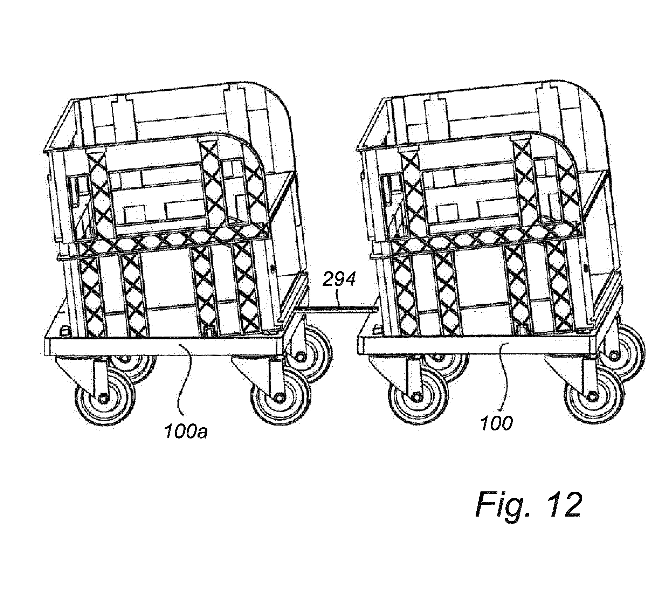

Fig. 12 illustrates the possibility of connecting two trolleys 100, 100a to each other, in accordance with at least one exemplary embodiment of the present inventive concept. The trolleys 100, 100a may be connected in any suitably way. For instance, the trolley in Fig. 1 illustrates a hole 190 or blind hole in the rearward portion 122 of the base and a similar hole 192 or blind hole in the forward portion 120. As illustrated in Fig. 12, a connecting arm 294 which may be provided with pegs or bolts at its respective ends for engaging holes 290, 292 may be used for connecting the two trolleys 100, 100a.

## Claims

1. A trolley and storage unit system, comprising
a trolley, and
at least one storage unit mountable on said trolley,
wherein the trolley is provided with wheels for transporting said storage unit, wherein the points of contact between said wheels and the ground are contained in a common geometrical plane,
wherein the storage unit is selectively arrangable in a first position in which said storage unit is non-tilted relative to said geometrical plane and in a second position in which said storage unit is tilted relative to said geometrical plane,
wherein one of said trolley and said storage unit comprises a first contact portion and a second contact portion,
wherein the other one of said trolley and said storage unit comprises a third contact portion, and
wherein in said first position of the storage unit, said first contact portion is in contact with said third contact portion, and in said second position, said second contact portion is in contact with said third contact portion.

2. The system as claimed in claim 1, wherein said first contact portion is located in a first geometrical plane and said second contact portion is located in a second geometrical plane which is different from said first geometrical plane, wherein each one of the first and second geometrical planes extends in parallel with said common geometrical plane.

3. The system as claimed in claim 2, wherein said second geometrical plane is located between said first geometrical plane and said common geometrical plane.

4. The system as claimed in any one of claims 1-3, wherein said trolley comprises said first contact portion and said second contact portion, and wherein said storage unit comprises said third contact portion.

5. The system as claimed in claim 4, wherein said first contact portion comprises at least one retaining portion adapted to mate with said third contact portion for counteracting lateral movement of said storage unit.

6. The system as claimed in any one of claims 1-5, wherein said trolley comprises a forward edge, a rearward edge and a base, wherein at least a portion of said base is inclined relative to said common geometrical plane, wherein the inclination is such that said inclined base portion is at a higher level near the forward edge compared to near the rearward edge.

7. The system as claimed in claim 6, wherein said second contact portion is located at said inclined base portion near the rearward edge of the trolley.

8. The system as claimed in any one of claim 6-7, wherein said base comprises a lower side and an upper side, wherein said wheels of the trolley include at least one forward wheel and at least one rearward wheel located on the lower side of the base,
wherein, as seen in directions perpendicular to said geometrical plane, said base is on its upper side provided with at least one forward recess aligned with said forward wheel and at least one rearward recess aligned with said rearward wheel.

9. The system as claimed in claim 8, wherein said forward recess is larger than said rearward recess, wherein said forward and rearward recesses are at least partly located at said inclined portion of the base.

10. The system as claimed in any one of claims 6-9, wherein said base comprises a rearward edge portion which defines a wall extending downwardly towards the inclined base.

11. The system as claimed in any one of claims 1-10, wherein said third contact portion is a rearward portion of said storage unit.

12. The system as claimed in any one of claims 1-11, wherein said at least one storage unit comprises a plurality of storage unit which are stackable,
wherein when a lowest storage unit is arranged on said trolley in said first position, the other storage units of said plurality of storage units are stackable on top of said lowest storage unit so that each one is non-tilted relative to said common geometrical plane, and
wherein when a lowest storage unit is arranged on said trolley in said second position, the other storage units of said plurality of storage units are stackable on top of said lowest storage unit so that each one is tilted relative to said common geometrical plane.

13. The system as claimed in claim 12, wherein said plurality of storage units are formable into a stack of non-tilted storage units having a total height which is lower than what the total height would be if the same plurality of storage units were formed into a stack of tilted storage units.

14. The system as claimed in any one of claims 12-13, wherein when said plurality of storage units are formed into a stack of tilted storage units on the trolley, a lower portion of each storage unit is, relative to an upper portion of the nearest underlying storage unit, displaced towards the forward edge of the trolley.

15. The system as claimed in claim 14, wherein each storage unit has a first locking means at a lower portion thereof and a second locking means at an upper portion thereof, wherein the first locking means of the one of the storage units is adapted to mate with a second locking means of the nearest underlying storage unit.
